# EUROPEAN PATENT APPLICATION

(11) **EP 3 407 288 A1**
(43) Date of publication of application: **28.11.2018**
(21) Application number: 17172314.1
(22) Date of filing: 22.05.2017
(51) Int. Cl.: G06Q 40/00

(54) **APPARATUS AND METHOD FOR GENERATION OF A FINANCIAL EVENT DATABASE**

(71) Applicant: Fujitsu Limited, Kawasaki-shi, Kanagawa 211-8588 (JP)
(72) Inventor: LLAVES, Alejandro, 28011 Madrid (ES); GARCIA SANTA, Nuria, 28010 Madrid (ES); TORRE, Victor de la, 28007 Madrid (ES)
(74) Representative: Haseltine Lake LLP

(57) **Abstract**

An apparatus, method and program for generating a financial event database, the apparatus comprising: an event provider configured to extract financial events from plural heterogeneous sources, to categorise the extracted events using a plurality of refined event patterns, and to store events matching a refined event pattern in an event storage unit; a reconciliation unit configured to retrieve the stored events matching a refined event pattern from the event storage unit, to definitively identify entities in the events, to identify a time of occurrence for the events, and to determine if plural stored events relate to the same occurrence, wherein if the reconciliation unit determines that plural stored events relate to the same occurrence, the reconciliation unit reconciles the stored events such that only a single event relating to a given occurrence is retained; a query generator configured to receive a query from a user, to reformat the query into a multiple-event pattern query, and to pass the multiple-event pattern query to a semantic event processor; a semantic event processor configured to semantically annotate the events retained by the reconciliation unit, such that no information from the plural stored events relating to the same occurrence is lost, and further configured to receive the multiple-event pattern query from the query generator, to identify plural events that collectively match the multiple-event pattern query, and to store the plural events as a multiple event query response in a multiple event storage unit.

## Description

. The invention relates to an apparatus and method for generating a financial event database. Also disclosed are a computer program which, when executed by a computer, causes the computer to perform the method, and a non-transitory computer readable medium comprising the computer program.

. In recent years the amount of data generated and available for analysis in various technological areas has increased rapidly. This is particularly the case since the advent of the Internet, which has both significantly increased the amount of information generated in various technological areas and has also simultaneously increased the availability of information. The increase in the availability of information may be useful when seeking to analyse the trends and processes in technological areas, or make predictions about future trends.

. Problems may arise as techniques for obtaining and analysing available information, and in particular for filtering out useful information for a given purpose from the available information, have not matched the pace at which the amount of available information has increased. This may lead to issues whereby it is not possible to extract relevant information from all of the available information in a useful time frame, and consequently it may be difficult to obtain, filter and analyse all or the majority of the useful information.

. An area in which the problems of filtering useful information from irrelevant information is particularly acute is the financial area. In financial analyses, it is necessary to take into account the actions of a large number of different entities such as various companies, banks, government regulators, as well as other factors, in order to fully analyse aspects of financial markets or make useful predictions of future trends. The amount of potentially relevant information generated which may influence financial markets may be large, therefore filtering the information may be a difficult task. Also, the data may be available in a large number of disparate forms. For example, and taking only the forms which are widely used on the internet in relation to financial markets, useful information may be obtained from news reports, RSS feeds, stock trackers, blogs, and so on.

. Because of the large volume of information available, and also the disparate nature of the sources of the information, it may be very difficult for a user to keep up with the flow of information provided and extract useful information from the flow in a reasonable time frame. As a consequence of this, a user may elect to monitor a subset of the available data sources (a single blog or a single stock tracker, for example), however this approach may lead to potentially key information not being monitored and therefore being omitted from a subsequent analysis.

. For the above reasons, it is desirable to provide a mechanism allowing relevant events to be detected, automatically extracted and made available for analysis without requiring ongoing human input. It is further desirable if events relating to particular entities may be specifically identified and stored for further analysis.

. Embodiments provide an apparatus and method for generating a financial event database, the apparatus comprising: an event provider configured to extract financial events from plural heterogeneous sources, to categorise the extracted events using a plurality of refined event patterns, and to store events matching a refined event pattern in an event storage unit; a reconciliation unit configured to retrieve the stored events matching a refined event pattern from the event storage unit, to definitively identify entities in the events, to identify a time of occurrence for the events, and to determine if plural stored events relate to the same occurrence, wherein if the reconciliation unit determines that plural stored events relate to the same occurrence, the reconciliation unit reconciles the stored events such that only a single event relating to a given occurrence is retained; a query generator configured to receive a query from a user, to reformat the query into a multiple-event pattern query, and to pass the multiple-event pattern query to a semantic event processor; a semantic event processor configured to semantically annotate the events retained by the reconciliation unit, such that no information from the plural stored events relating to the same occurrence is lost, and further configured to receive the multiple-event pattern query from the query generator, to identify plural events that collectively match the multiple-event pattern query, and to store the plural events as a multiple event query response in a multiple event storage unit. In this way, a database of event information is provided that may effectively provide responses and reports according to user requirements.

. The apparatus may comprise a stock event generator configured to extract stock time-series events from stock market data websites, and to pass the extracted stock time-series events to the reconciliation unit. The apparatus may additionally or alternatively comprise an XBRL report event generator configured to periodically retrieve XBRL reports from XBRL sources, to extract XBRL events from the XBRL reports, and to pass the extracted XBRL events to the reconciliation unit. By retrieving data from a broad range of sources, the completeness and accuracy of the events stored in the multiple event storage unit is improved. Also, the use of a separate stock event generator and/or XBRL report event generator allows the event provider to be focussed on more unstructured data sources, such as blogs and rss feeds as discussed below.

. The plurality of heterogeneous sources may be unstructured. The system is configured such that the retrieval of information from unstructured sources does not impede the operation of the system. The plurality of unstructured heterogeneous sources may comprise blogs, news reports and rss feeds, as well as other sources.

. The reconciliation unit may utilise an entity index to determine if plural stored events relate to the same occurrence. In this way, identification of duplicated information is simplified.

. The event provider may comprise a machine intelligence which is used to generate the plurality of refined event patterns from sample event patterns, the sample event patterns being obtained from raw data. Machine intelligences, such as neural networks, are particularly well suited to use in the event provider due to the capability for training.

. The query generator may utilise an established database to reformat the received query, potentially including the use of information from the event provider. This may help reduce the reliance of the system on external information sources.

### Description of Figures

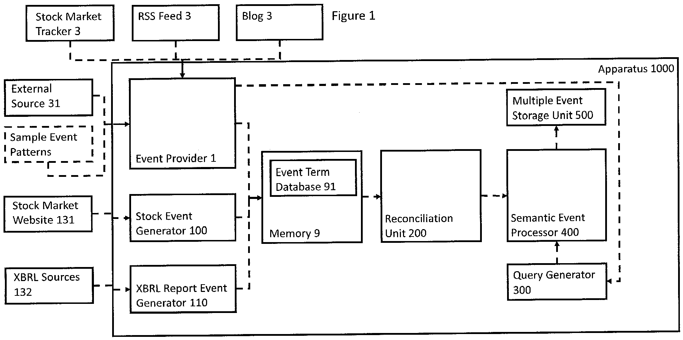

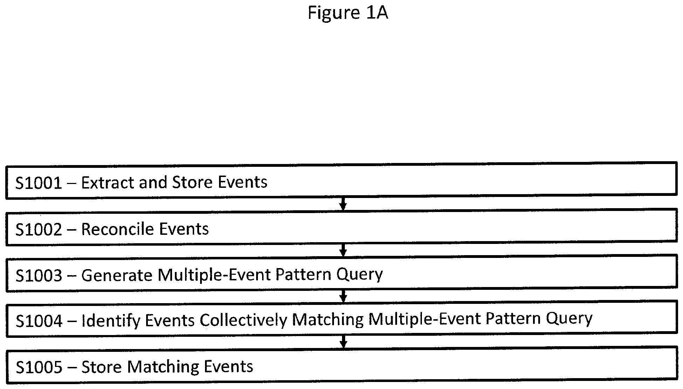

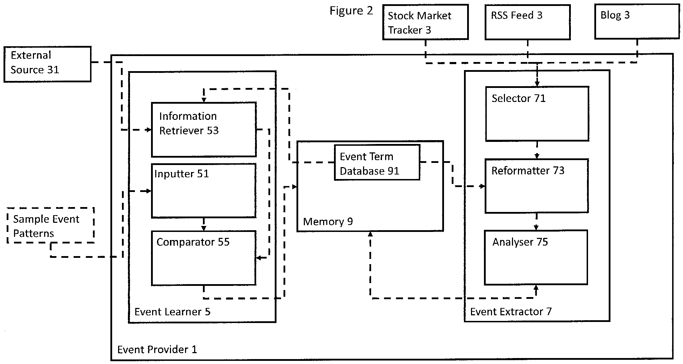

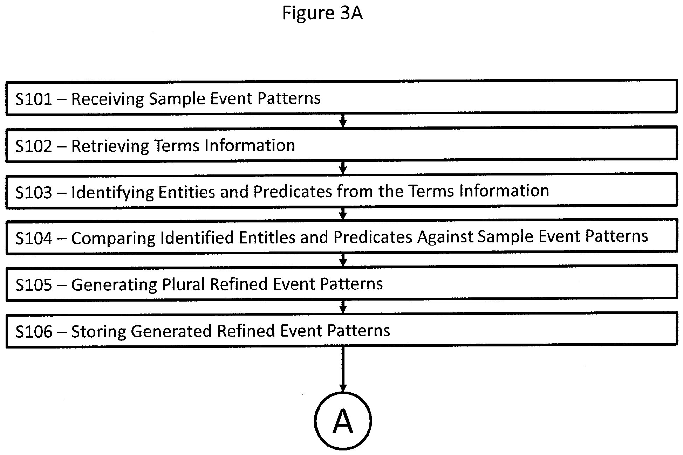

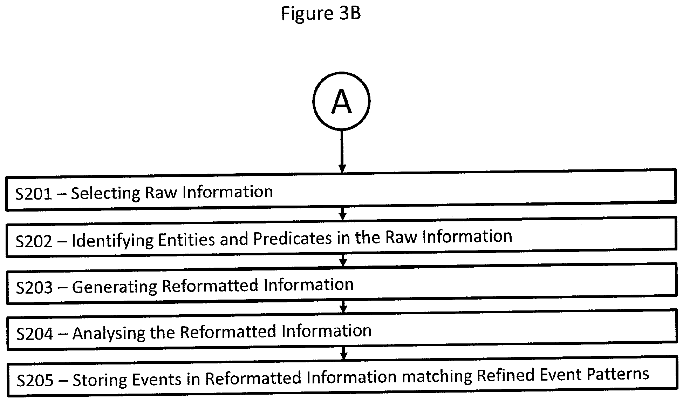

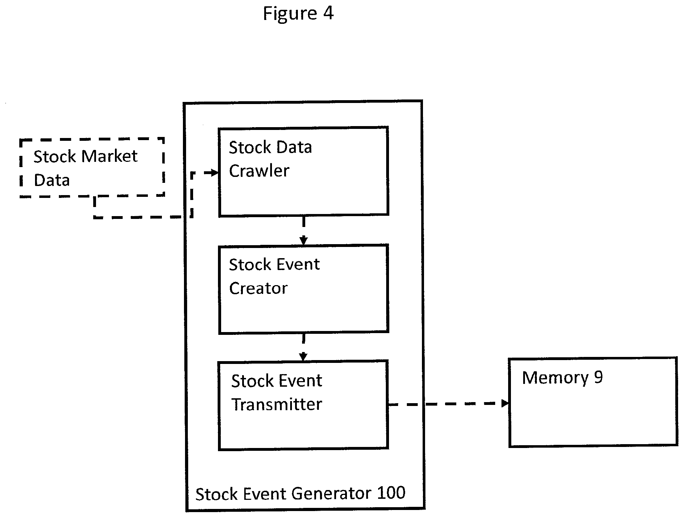

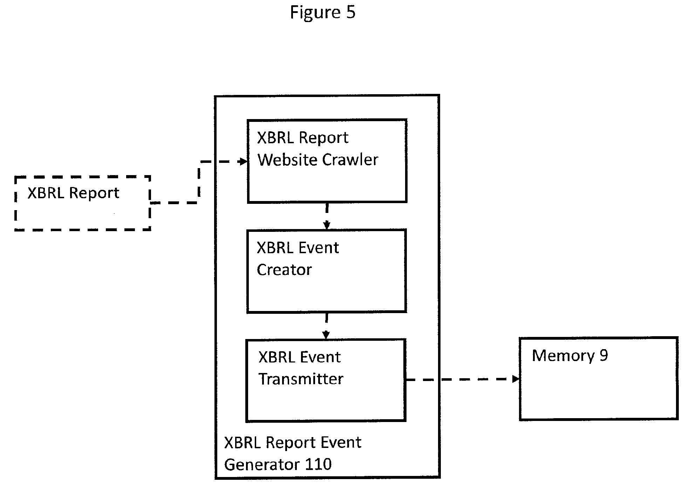

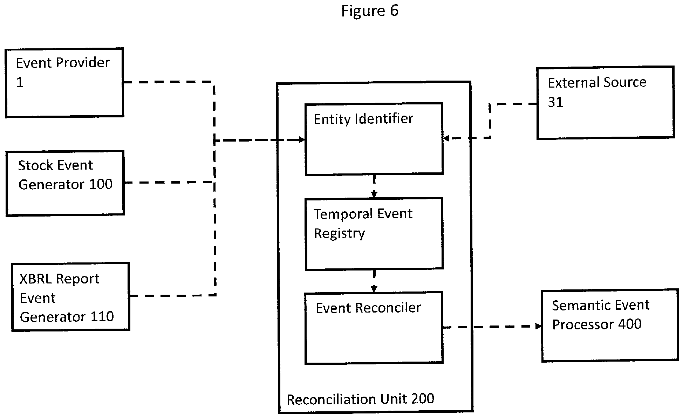

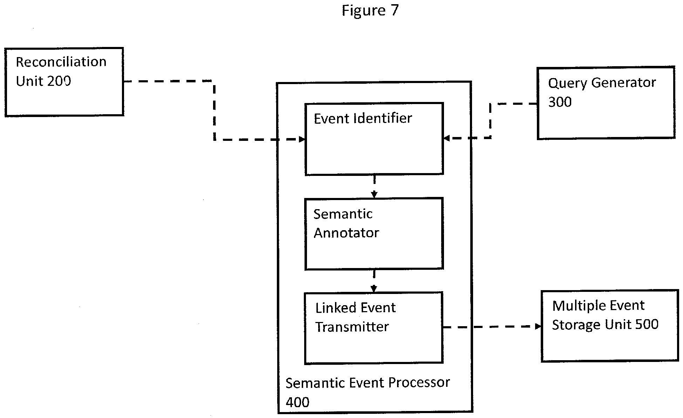

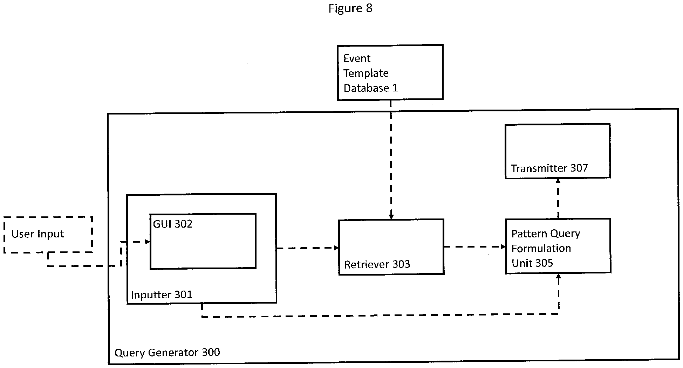

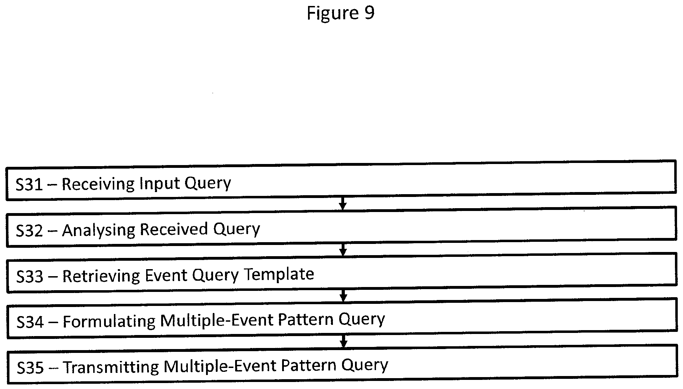

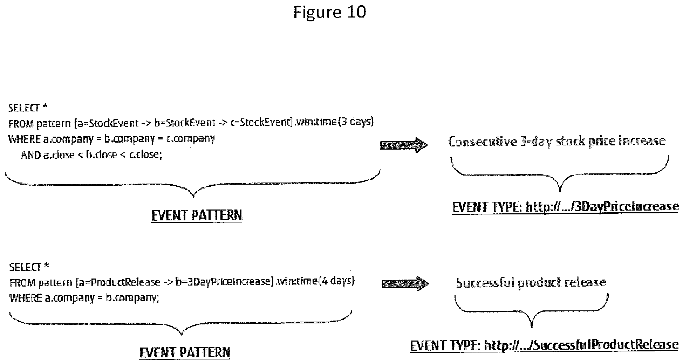

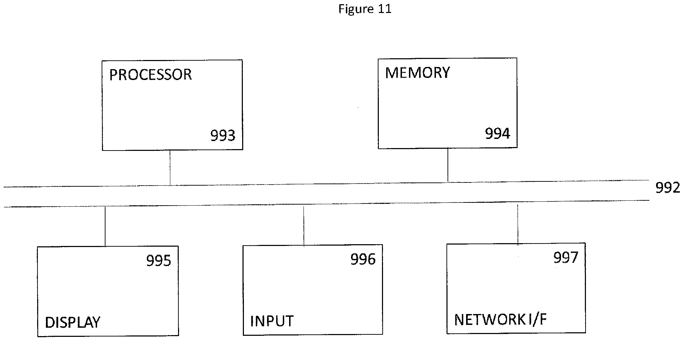

. The invention is described, by way of example only, with reference to the following Figures, in which:
. Fig. 1 is a schematic diagram of an apparatus in accordance with an embodiment.
. Fig. 1A is a flowchart of a method in accordance with an embodiment.
. Fig. 2 is a schematic diagram of an event provider in accordance with an embodiment.
. Fig. 3A is a flowchart illustrating a method for the generation of the plurality of refined event patterns in accordance with an embodiment.
. Fig. 3B is a flowchart illustrating the identification of events matching refined event patterns in accordance with an embodiment.
. Fig. 4 is a schematic diagram of a stock event generator in accordance with an embodiment.
. Fig. 5 is a schematic diagram of an XBRL report event generator in accordance with an embodiment.
. Fig. 6 is a schematic diagram of a reconciliation unit in accordance with an embodiment.
. Fig. 7 is a schematic diagram of a semantic event processor in accordance with an embodiment.
. Fig. 8 is a schematic diagram of a query generator in accordance with an embodiment.
. Fig. 9. is a flowchart illustrating a method for multiple-event pattern query generation in accordance with an embodiment.
. Fig. 10 is a diagram of a sample event pattern.
. Fig. 11 is a block diagram of a computing device which embodies an embodiment.

### Detailed Description

. The system may be configured to generate one or more financial event databases using events from a broad variety of different areas. An event instance in this context is an occurrence or change of situation which may have ramifications for one or more entities. For example, an event may relate to some sort of detectable change in a company, sector or customer behaviour. An example of this may be the release of a new product by a company, or a company completing a merger with another company. Customer specific events may relate to events such as the issuing of a warning of potentially problematic economic circumstances (which may suppress customer spending) or a fluctuation in a currency market.

. By analysing the response to particular events, it may be possible to identify future events following a similar pattern at an earlier stage, and thereby predict future occurrences on the basis of early identification of these events. This has clear benefits, for example, in terms of dealing in stocks and shares, allowing a company to predict stock requirements or financial reserves required.

. An event pattern is a form of template for ternary information, which maps onto a specific event when generic variables are replaced with specific values. For example, and in a business context, an event pattern may be of the form <unknowncompanyX; sells; unknowncompanyY>. In this event pattern, there are two partially defined entities:
unknowncompanyX and unknowncompanyY. These entities are specified to be of the type "company" but are not limited to a specific company. The two partially defined entities unknowncompanyX and unknowncompanyY may also be referred to as the subject and object respectively. The event pattern also contains an operator (or predicate); in this case "sells". The general form of an event may therefore be abbreviated to <S; P; O>, that is, <Subject; Predicate; Object>. A specific event matching the example event pattern would be of the same general form, but with specific entities in the place of the generic placeholders used above. For example, a specific event matching this event pattern may be of the form <A Ltd.;
sells; B Ltd.>. In this event, the subject and object (both entities) are "A Ltd." and "B Ltd." respectively (both defined entities of the type "company"), and the predicate is "sells".

. A schematic of the apparatus 1000 according to an aspect of an embodiment is shown in Fig. 1. A flowchart of a method according to an aspect of an embodiment is shown in Fig. 1A.

. The apparatus 1000 is first configured to extract and store events from a plurality of heterogeneous sources 3. The initial event extraction and storage is performed by the event provider 1, an example of which is shown schematically in Fig. 2. The event provider 1 may be configured to receive sample event patterns and to retrieve term information from external sources 31, and/or from an event term dictionary 91. The term information may be analysed to identify entities and predicates within the term information. Based on the identified entities and predicates and analysis of the received sample event patterns, the apparatus may be configured to generate a plurality of refined event patterns. These refined event patterns may relate to specific entities which are of particular interest to a given user (particularly in relation to a given area of interest), and may be tailored so as to be directed to event types the user is particularly interested in.

. Initially desired events are obtained and stored, as shown in step S1001 of Fig. 1A. Obtaining the desired events may be divided into two separate processes: the initial generation of the plurality of refined event patterns as discussed above, and the subsequent analysis of raw information from a plurality of heterogeneous sources 3 utilising the refined event patterns such that events matching the refined event patterns may be identified. These events matching the refined event patterns may then be stored for more detailed analysis, either in the memory 9 or elsewhere. Accordingly, the event provider 1 may be divided into two primary components: an event learner 5 and an event extractor 7. The event learner 5 is responsible for generating the plurality of refined event patterns, as discussed below with reference to the flowchart in Fig. 3A. The event extractor 7 is responsible for identifying events from the heterogeneous sources 3 that match the refined event patterns, as discussed below with reference to the flowchart in Fig. 3B. The event provider 1 also comprises a memory 9 for data storage. Where an event term database 91 is used, this may be stored in the memory 9 of the event provider 1, or elsewhere.

. The event learner 5 comprises an inputter 51, an information retriever 53 and a comparator 55. The inputter 51 is configured to receive sample event patterns, as shown in step S101 of Fig. 3A. Typically the sample event patterns are obtained by using a rule-based algorithm to select the patterns from publicly available unstructured texts, such as news websites as are available on the Internet. Established tools such as OpenIE and SyntaxNet may be used in this process. The sample event patterns are typically of the form discussed above, that is, subject; predicate; object. Some examples of sample event patterns are shown below, wherein "S" indicates a subject type, "P" a predicate type and "O" an object type.
- {S=CompanyEntity, P=acquire, O=CompanyEntity} / (S ≠ O)
- {S=CompanyEntity, P=buy, O=CompanyEntity} / (S ≠ O)
- {S=CompanyEntity, P=designate_CEO, O=PersonEntity}
- {S=PersonEntity, P=is_named_CEO, O=CompanyEntity}

. The initial sampling may take into account input from existing databases of entity types, which may also associate entities with types and give a confidence score to the association.

. The event learner further comprises an information retriever 53 configured to retrieve term information from external sources 31, and to identify entities and predicates using the term information, as shown in steps S102 and S103 of Fig. 3A. It is useful to draw on external sources 31 such as existing databases, because relevant entities will be area of operation specific, and there may be a large number of entities in the area. Examples of entities in financial or business areas could be companies, specific persons, specific products, and so on. In addition to containing the types of various different entities, an external source 31 may also contain confidence scores for the identification of the type. These confidence scores may be established through analysis of existing results. Typically, a higher confidence score would indicate a higher degree of certainty that a given entity had been correctly identified as a particular type. For example, considering the situation where entity A has been identified as a company with a confidence score of 0.5, and entity B has been identified as a company with a confidence score of 0.9, this would indicate that there was a higher degree of certainty that entity B was a company than that entity A was a company. Where a given entity is identified as two different types having two different confidence scores (wherein the two types are not compatible), the type having the higher confidence score is selected as the correct type for the entity.

. The event provider 1 may include an event term database 91, which may be used in the identification of predicates. Alternatively, a source of predicate information that is separate from the event provider 1 may be used, which may be an event term database 91 separate from the event provider 1. In the embodiment shown in Fig. 1, the event term database 91 is located in the memory 9, which is separate from the event provider 1. The event term database 91 operates as a glossary of relevant terminology for a given area, and as such the information contained therein is generally area specific. In addition to identifying relevant predicates, the event term database 91 may be used to identify relationships between predicates (such as equivalence or inverse relationships).

. Where an event term database 91 is used, this is used to store predicates related to the events which are processed by the event provider 1. The event term database 91 may be useful in the generation of the sample event patterns, the generation of the plural refined event patterns and the subsequent identification of relevant events. The schema of the event term database 91 may use the following general form:

```
       Root/Canonical Term
              Synonyms: [
              {label: string, influence: number}, {label: string, influence:
              number}, ...]
              Inverses: [
              {label: string, influence: number}, {label: string, influence:
 number}, ...]
```

. The 'Root/Canonical Term' is the main nomenclature to define a set of terms. This root term will have a collection of synonyms with the label/term and the value of the significance (influence) of that term inside that entry of the database. The significance of a given synonym is essentially a measure of the relevance of that synonym within the Root/Canonical term, and is related to the similarity in meaning between the Root/Canonical term and the synonym. That is, the significance is a measure of how often the Root/Canonical term could be replaced with the synonym without altering the meaning of a given event. The same structure may be used to describe the collection of inverse terms/properties. The example below shows an entry within the definition of terms for the financial domain, wherein the Root/Canonical Term is "Acquisition":

```
       Acquisition
              Synonyms: [
              {label:'buy', influence: 0.8}, {label:'acquire', influence: 0.96},
              {label:'purchase', influence: 0.51}, {label:'trade', influence: 0.56},
 {label:'gain', influence: 0.43}, {label:'obtain', influence: 0.72}, ...]
              Inverses: [{label:'sell', influence: 0.8}, {label:'release',
 influence: 0.32}, ...]
```

. Where an event term database 91 is used, the predicate information contained therein may be used at several stages of the process for obtaining the desired events, including by the information retriever 53 and by the reformatter 73.

. The information obtained by the information retriever 53 may be passed to the inputter 51 for use in selection of the sample event patterns. This may allow the sample events to be selected that are events of some relevance to the technological area under investigation (and contain entities and/or predicates recognised as being present in that technological area).

. Once obtained, the sample event patterns may be passed directly to the inputter 51. However, it is possible that in the initial sampling, less relevant event patterns may also be included in the sample event pattern set. As discussed above, the proportion of less relevant event patterns in the sample event pattern set may be reduced by using the information obtained by the information retriever 53 (potentially from the event term database 91) when selecting the sample event patterns. Optionally, to improve the accuracy with which the system identifies matches, the sample event patterns may be curated by one or more experts in the field, such that the most relevant sample event patterns may be identified and then utilised in the further processing of the system. A typical expert curation would require the input from human experts in whatever area the event provider 1 was to be used to extract events. For financial areas, this could be a financial analyst or a banker.

. The information from the inputter 51 and the information retriever 53 is passed to the comparator 55. The comparator 55 is configured to compare the identified entities and predicates in the sample event patterns, and to generate a plurality of refined event patterns using the identified entities and predicates and the sample event patterns. This is shown in steps S104 and S105 of Fig. 3A. The generated plurality of refined event patterns are then stored in the memory 9, as shown in step S106 of Fig. 3A. Although various different configurations of comparator 55 may be used, typically a machine intelligence is utilised in the comparator 55 to generate the plurality of refined event patterns. This is because machine intelligences are particularly well suited to analysing the disparate information including the sample event patterns which may be provided to the comparator 55 and generating the refined event patterns using this information. An example of the type of machine intelligence which may be utilised in this role is a neural network (such as a convolutional neural network), although alternative techniques utilising conditional random field (CRF) methods may also be used. Essentially, the comparator 55 may apply training techniques, using the machine intelligence if present, to refine the sample event pattern set and produce the plurality of refined event patterns. Collectively, the plurality of refined event patterns may be referred to as an event model.

. As an example of the process performed by the inputter 51 and information retriever 53, the example raw information:
"Newspaper Company A Buys Website B. The company also bought Website C, a sister site. Both are product recommendation websites that offer guides on tech gadgets and home products" may be obtained by the inputter 51. From this text, the information retriever 53 could identify entities and predicates as shown in the six extracted information statements below (optionally with reference to the event term database 91 and/or external sources 31):
   1 -{S= Newspaper Company A, P=buy, O=Website B}
   2 -{S= Newspaper Company A, P=buy, O= Website C}
   3 -{S= Website B, P=offer, O=guides on tech gadgets}
   4 -{S= Website C, P=offer, O=guides on tech gadgets}
   5 -{S= Website B, P=offer, O=guides on home products}
   6 -{S= Website C, P=offer, O=guides on home products}

The types of the entities and the root terms of the predicates could then be identified as follows, with reference to the same six statements:
1 -{S=CompanyType:0.94 (confidence); LocationType:0.61, P=Root[Acquisition:0.8]; Root[Merge:0.68], O= CompanyType:0.91}
2 -{S= CompanyType:0.94; LocationType:0.61, P= Root[Acquisition:0.8]; Root[Merge:0.68], O= CompanyType:0.87}
3 -{S= CompanyType:0.91, P= Root[CatalogOffer:0.87], O= ProductType:0.75}
4 -{S= CompanyType:0.87, P= Root[CatalogOffer:0.87], O= ProductType:0.75}
5 -{S= CompanyType:0.91, P= Root[CatalogOffer:0.87], O= ProductType:0.71}
6 -{S= CompanyType:0.87, P= Root[CatalogOffer:0.87], O= ProductType:0.71}.

The resulting information may then be passed to the comparator 55.

. The comparator 55 will typically utilise the confidence scores of the entity types if these are available, as well as the significance value of the predicate from the event term database 91, when identifying events. A portion of an example of an algorithm which may be utilised to identify a particular event types is as follows, wherein identification of event types is performed based on identification of a subject and object at a confidence level above a minimum threshold and predicate at a significance level above a minimum threshold.
If(S==CompanyEntity.confidence > 0.8)
If(O==CompanyEntity.confidence > 0.8)
If(P==Dictionary.root[Acquisition] > 0.75)
EventType = Acquisitions

In the above example, the subject and object are both identified as companies with a confidence score above 0.8, and the predicate is identified as being derived from the root term "Acquisition" (that is, including "acquires", "acquired", and so on) with a significance of above 0.75. As a result, the algorithm identifies the event type as an Acquisition.
If(S==CompanyEntity.confidence > 0.8)
If(O==ProductEntity.confidence > 0.8)
If(P==Dictionary.root[Release] > 0.85)
EventType = ProductRelease

In the above example, the subject is identified as a company with a confidence score above 0.8, the object is identified as a product with a confidence score above 0.8, and the predicate is identified as being derived from the root term "Release" with a significance of above 0.85. As a result, the algorithm identifies the event type as a Product Release.

. Although alternative techniques may be utilised when the confidence scores or significances are not available, or when it is desired to not utilise the confidence scores or significances, typically techniques utilising the confidence scores and significances provide the most accurate results.

. Following the identification of a plurality of refined event patterns, the comparator 55 may optionally be configured to optimise the event list by identifying multiple descriptions of the same fact, that is, events that are equivalent to one another. An example of this (utilising example
companies A Ltd. and B Ltd.) would be that the event
   <A Ltd.; buys; B Ltd.>
is equivalent to the event
   <B Ltd.; is bought by; A Ltd.>
Similarly, the two events:
   <A Ltd.; buys; B Ltd.>
and
   <A Ltd.; acquires; B Ltd.>
may also be treated as equivalent. Utilising the event term database 91, it is possible to optimise the plurality of refined event patterns by combining the two equivalent event patterns into a single (reconciled) pattern. In the above example, this would be
   <A Ltd.; [acquire, buy]; B Ltd.>.

. Following the generation (and optional reconciliation) of the refined event patterns, the plurality of refined event patterns (that is, the event model) may then be stored in a memory 9. A portion of an event model is shown in table 1 below.

**Table 1**

| **ProductEnt** | **CompanyEnt** | **PersonEnt** | **LocationEnt** | **Root 1 (ex. Adquisition)** | **Root 2 (ex. Release** | **Root 3 (ex. Merge)** | **...** | **EventType** |
|---|---|---|---|---|---|---|---|---|
| 0.85 | 0.86 | 0.42 | 0.1 | 0.2 | 0.92 | 0.21 | | ProductRelease |
| 0.3 | 0.98 | 0.3 | 0.0 | 0.9 | 0.15 | 0.84 | | Acquisitions |
| 0.68 | 0.95 | 0.71 | 0.45 | 0.85 | 0.22 | 0.97 | | CompanyMerge |
| ... | ... | ... | ... | ... | ... | ... | | ... |

. Table 1 illustrates how different types of event may be identified by provisionally identifying the subject, predicate and object involved in the event. Based on the confidence scores with which the different subjects, predicates and objects are identified, the event may then be determined and given an overall combined confidence score. Taking the example in line 1 of the table, when it is identified that the subject is of the type "company", the predicate is of the type "release" and the object of the type "product", this event may be identified as a "product release" with a high degree of confidence. The refined event patterns are referred to as such because, prior to the storage of these patterns in the memory 9, the machine intelligence aspect of the comparator 55 is used to train the system and identify the desired event patterns, thereby refining the retained event pattern set.

. Once the plurality of refined event patterns have been stored in the memory 9, the identification of relevant events by the event extractor 7 may be performed, as illustrated by the flowchart in Fig. 3B.

. The event extractor 7 comprises a selector 71, a reformatter 73 and an analyser 75. These components are discussed in turn below. The selector 71 is configured to select raw information from a plurality of heterogeneous sources 3, as shown in step S201 of Fig. 3B. Typically, the heterogeneous sources 3 are unstructured, although the system may also operate using structured information. While the system may operate using structured information, the use of structured information does not make best use of the full capabilities of the system to extract useful information from unprocessed (unstructured) sources 3 which are not specifically intended for use in analyses, such as RSS feeds, news articles, blogs, and so on (as shown in Figs. 1 and 2). Unstructured information is information which has not been specifically configured to be inputted into and understood by an automatic system. Typically, unstructured information has instead been written in such a way as to be easily understood by a human reader. When structured information is inputted into the system, this is interpreted by the system in the same way as unstructured information.

. In order to allow information to be extracted from these unstructured sources, the selector 71 may utilise known text trawling techniques. Typical sources for the information could include news websites, company web pages, stock market feeds, online shopping sites, and so on. However, rather than simply trawling for information and collecting any information found, the selector 71 is configured to identify information specifically relating to the area of interest. For example, wherein business type events are being analysed, the selector 71 will not collect and retain information relating to sports results.

. Once raw information has been selected from the heterogeneous (and potentially unstructured) sources 3, this raw information is then passed to the reformatter 73. The reformatter 73 reformats the information into a typical ternary information form, that is, identifying entities and predicates (or subject predicates and objects), as shown in steps S202 and S203 of Fig. 3B. The sentences below give examples of extracted information, in which the subject, predicate and object have been identified this in a business context is shown below. The information required to identify the entities and predicates may be obtained from the event term database 91 and/or external sources 31 (similar to the process performed by the information retriever 53).
- A Ltd. opens a new division in Madrid
   Subject = A Ltd.
   Predicate = Opens
   Object = Division
- B Ltd. creates a new Al product
   Subject = B Ltd.
   Predicate = Creates
   Object = Al Product

. Once the raw information has been analysed as discussed above to identify the entities and predicates, this information is then referred to as reformatted information. The reformatted information is essentially a list of ternary relationships detected in the heterogeneous sources 3. The reformatted information is then passed to the analyser 75.

. The analyser 75 is configured to analyse the reformatted information with reference to the plurality of refined event patterns stored in the memory 9, as shown in step S204 of Fig. 3B. In particular, the analyser 75 determines whether or not any of the reformatted information received from the reformatter 73 may be matched against any of the plurality of refined event patterns. When a refined event pattern matches some of the reformatted information, this reformatted information may then be stored as an event instance, as shown in step S205 of Fig. 3B. For example, a refined event pattern stored in the memory 9 may relate to the opening of new divisions by a company, in which case the reformatted information linked to the first example listed above ("A Ltd. opens a new division in Madrid") may be stored. The storage may take place in the same memory 9 as is used to store the refined event patterns, or in a separate memory. In the embodiment shown in Fig. 1, the memory 9 is used. When the reformatted information contains additional information (such as the time, date, location, etc. of the event), this information may also be stored in conjunction with the event instance.

. In order to make predictions on the basis of the interaction of a plurality of events, it may be helpful to be aware of the timing of these events. As an example of this, it may be possible to predict that the share price of a company would rise following a successful product launch. As such, timing information may be of use in analyses performed using the stored event instances.

. In addition to the event provider 1 as discussed above, the apparatus may further comprise a stock event generator 100. The stock event generator 100 performs a related task to that performed by the event provider 1, however this is a specialised module which is not configured to operate with the information from plural heterogeneous (and unstructured) sources. Instead, the stock event generator 100 is configured to extract events specifically related to variations in the stock prices of companies over time. These events may be obtained from stock market websites 131 providing stock market tracking data, such as the FTSE website, the NASDAQ website and so on. Data obtained from these websites is provided in a standardised format, and accordingly it is not necessary for the stock event generator 100 to perform the complex processing performed by the events provider in order to obtain and categorise the stock time-series events.

. In the stock event generator 100, time stamped data points indicating the price of relevant stocks are first obtained from the relevant websites (as discussed above) by a stock data crawler. Once obtained, the data point in the time-series are converted into event instances by an event instance creator. The exact nature of the instances obtained will depend upon the precise use within the model. For example, it is possible that the stock event generator 100 could be configured to extract data at a high frequency (for example; every minute) and thereby record every variation in the stock price of a given stock. Alternatively, in the event that it is desired to monitor a larger number of stocks on a lower level of granularity, the stock event generator 100 could be configured to obtain data such as a daily high, daily low, opening and closing values and so on for a given stock or a plurality of stocks. Optionally, the stock event generator 100 could be configured to obtain event instances relating to the same stock or related stocks from a plurality of different stock markets, so as to allow the progress of a given company to be tracked on a more global scale. Further, the unit may also be configured to attach metadata to the event instances indicating the providence of the information, that is, from which websites the stock time-series events have been obtained. A diagram of the stock event generator 100 is shown in Fig. 4 of the application.

. Similarly to the stock event generator 100, the apparatus may optionally also comprise a XBRL report event generator 110. The XBRL report event generator 110 is similar to the event provider 1 as discussed above, but is also configured to operate using structured information sources obtained from a limited number of websites. In particular, and as suggested by the name of the component, the XBRL report event generator is configured to operate using XBRL reports.

. The acronym "XBRL" stands for extensible Business Reporting Language, and is a standard format used for exchanging business information. This language is based on XML, and is commonly used in accounting fields to exchange financial information, such as financial statements. The language typically makes heavy use of metadata, indicating relations between different concepts using tags or similar techniques. Because XBRL provides data in a standardised format, it is not necessary to perform the complex processing used by the event provider 1. Instead, the XBRL report event generator is configured to periodically retrieve XBRL reports from XBRL sources 132. Numerous websites are available (for example, the US government Securities and Exchange Commission website at https://www.sec.gov/dera/data/financial-statement-data-sets.html, accurate as of 22 May 2017) which periodically issue XBRL reports in relation to companies in a given field or fields. The XBRL report event generator 110 is configured to check these websites with a given periodicity (which may be set by a user) to obtain the reports, potentially using a website crawler. Once obtained, the reports are analysed by the XBRL report event generator 110, potentially using an XBRL event creator, to extract relevant event instances from the reports. Because the reports will generally provide a detailed overview of a situation of a governed company, it is not unusual for multiple event instances to be extracted from a single XBRL report. A schematic of the XBRL report event generator 110 is shown in Fig. 5 of the application.

. In the event that one or both of the stock event generator 100 and the XBRL report event generator 110 are included in the apparatus, the event provider 1 may be configured to specifically avoid obtaining information from sources which may be used by these generators. For example, in the event that the XBRL report event generator 110 is included in the apparatus, the event provider 1 may then be configured to not obtain information from XBRL sources.

. Event instances obtained by the event provider 1, and optionally by one or both of the stock event generator 100 and the XBRL report event generator 110, are typically stored. In the embodiment shown in Fig. 1, the obtained event instances are stored in the memory 9. The event instances are then passed to the reconciliation unit 200. A diagram of the reconciliation unit 200 is shown in Fig. 6.

. The primary purpose of the reconciliation unit 200 is to reconcile the event instances provided by the event provider 1, and optionally also by the stock event generator 100 and the XBRL report event generator 110, so as to avoid multiple event instances describing the same occurrence being processed by the apparatus 1000. This is shown in step S1002 of Fig. 1A. That is, given the occurrence of two companies, such as companies A and B merging, it is possible that this occurrence would be reported on by multiple different sources. Individual company web pages, financial news web pages and blogs could all comment on this occurrence. Similarly, an XBRL report would typically be expected to include comments on such an occurrence. Accordingly, it is possible that multiple different event instances could be generated all of which relate to the same occurrence. In order to avoid confusion, the reconciler is configured to reconcile the event instances such that only a single event instance relating to a given occurrence is retained.

. The first step of the reconciliation process is for the reconciliation unit 200 to definitively identify the entities involved in all of the event instances passed to it by the event provider 1 (and optionally by the event generators 100 and 110), for example by using an entity identifier. In figure 6, the events are shown as being transmitted directly from the event provider 1 and event generators 100 and 110, however the events may also be retrieved by the reconciliation unit 200 from a memory (such as memory 9). In the identification process, the reconciliation unit 200 may rely upon an entity index. The entity index may be one of the external sources 31 as initially relied upon by the event extractor of the event provider 1 (as discussed above). This may be used to definitively identify each of the entities involved in a given event. As discussed above, the entity may be companies, people, products, and so on which may be present in event instances. In the event that an entity is present in an event instance which is not identifiable in the entity index, it is possible for the reconciler to create a new entity record for this entity. Optionally, this record may then be shared with the entity index.

. Once the entities in the event instances have been identified, the reconciler checks the arrival time of the event instances. Where multiple event instances containing the same entities arrive within a given time frame, this may be indicative that the event instances relate to the same real world occurrence. A temporal event registry is utilised by the reconciler to monitor the received events, such that each of these events may be time stamped. This is as shown in Fig. 6 of the application.

. As mentioned previously, where the reconciliation unit 200 identifies plural event instances relating to the same occurrence, these event instances are reconciled such that only a single event instance relating to the occurrence is retained. Even in the case where plural event instances relate to the same occurrence, it is possible that each of these event instances may contain different information. Returning to the example of two companies merging, it is possible that one event instance relating to this merger may contain the name of the new entity formed by the merged companies, and that another event instance relating to the same merger may contain the date of the merger. In the reconciliation process, the reconciliation unit 200 will reconcile these two event instances (using an event reconciler in the embodiment shown in Fig. 6) to create a single event instance (to be retained) which contains all of this information, that is, which contains both the name of the merged company and the date of the merger. Similar reconciliation may be performed using other information which may be included in the event instances. Where conflicting information is contained in events, the reconciliation unit 200 may retain all the different variants as alternatives. Alternatively, where it is possible to assign reliability to different sources, it is possible that the reconciliation unit 200 may attempt to identify the correct information and retain this information in the retained event instance. Returning once again to the merger of companies A and B, it is possible that different event instances may indicate that the name for the merged company is C, or that the name for the merged company is D. The reconciliation unit 200 may be configured to either retain both of C and D as alternatives for the name of the merged company, or if it is determined that there is a high probability that C is the correct name and that D is an incorrect name, to only retain the C name. This determination may be made based on the provenance of event instances, if this information is available.

. Once the reconciliation unit 200 has reconciled the event instances such that only a single event instance relating to a given occurrence is retained, this event instance may then be passed on to the semantic event processor 400, as shown in Figs. 1 and 6.

. The semantic event processor 400 is shown schematically in Fig. 7. As indicated in Fig. 7, in addition to receiving the reconciled events from the reconciliation unit 200, the semantic event processor 400 also receives multiple-event pattern queries from the query generator 300.

. The query generator 300 is configured to generate a multiple-event pattern query for use in the retrieval of event information, either from an event stream or from a stored database of events, as shown in step S1003 of Fig. 1A. The query generator 300 is shown schematically in Fig. 8.

. The query generator 300 is configured to receive a user input query. Based on this received query, the query generator 300 is configured to retrieve event query templates which may be relevant to the input query from an event template database 1. Then, utilising a combination of the original input query and the event query template retrieved from the event template database 1, the query generator 300 is configured to formulate a multiple-event pattern query (explained in detail below) which may then be transmitted to the database or to a system monitoring an event stream such that relevant events for providing a response to the original input query may be retrieved.

. Fig. 9 shows a flowchart of a method of multiple-event pattern query generation of an embodiment. The first step of the generation of the multiple-event pattern query is the initial receiving of the input query, as shown in step S31. The input query is received by the inputter 301. The primary function of the inputter 301 is to facilitate the entering of the input query into the system by the user.

. Typically, a user would formulate a query using natural language, that is, using common terminology and grammar in the same way as the query would be formulated were it to be put to a human respondent. An example of a query in a natural language form would be "how many Spanish companies have had a successful product launch in the last month". While this natural language query is easily understandable by a human user, for a computer the query would not easily be understood, and it would accordingly be difficult for a computer to reliably and efficiently monitor for events which may be relevant to the answer to this query. As natural language queries may be difficult for computer systems to consistently and accurately interpret, the inputter 301 is configured to assist a user in inputting a query in a way that may be accurately interpreted by the remainder of the apparatus 300. Various systems may be used to input the query, such as the display of a simple text box, with text entry operable via a keyboard.

. Optionally the inputter 301 may comprise a graphical user interface (GUI) 302 which is specifically configured to facilitate the entering of the natural language query into the inputter 301 by the user. As an example of the functionality which may be provided by the GUI 302, it is possible for this system to comprise a plurality of drop down menus which a user may select a specific entity (for example "A Ltd.", where A Ltd. is a company), or class of entities (for example "Japanese companies") to be entered into the query. The GUI 302 may also comprise various other settings, such as an option to set a time window of interest over which matching events should be searched for. The exact settings which may be configured using the GUI 302 will depend on the technological area to which the input query relates. As such, the inputter 301 may also be linked to a database of entities, such that the user may select known entities from the field of interest to be inputted into the query. Where a GUI 302 is used in the inputting of the initial input query, this may make the subsequent generation of the multiple-event pattern query (as discussed below) far simpler. Alternatively, for more skilled users, it may be possible for a user to input a query using a programming language, such as Subject Query Language (SQL) based languages.

. The inputter 301 may be further configured to perform an initial check of the structure of the received input query. That is, the inputter 301 may be configured to ensure that the received input query may be understood, and conforms to known grammatical structures. In the event that the initial checks suggests that there may be problems with the structure, this may be indicated to the user so that the user may reformulate the input query into a form which may be understood by the inputter 301. In the event that the input query has been written in a SQL based language, the inputter 301 may check the syntax of the query. Optionally, the inputter 301 may be further configured to suggest alternative structures for the same query to the user, such that it is easier for the user to reformulate the query into a structure that may be understood. Again, this is particularly efficient when paired with the GUI 302, because the alternative structures may easily be indicated (using alternative options in selection menus, and so on).

. The inputter 301 may additionally or alternatively be further configured to semantically annotate the input query inputted by the user. That is, the inputter 301 may be configured to either automatically or via further input from the user attach metadata tags to the input query explaining the type of information sought. As an example of this, metadata tags could be added indicating the type of information sought as a class type of the event. Again, semantic annotation of the input query may improve the retrieval of information in response to the query (once the query has been reformatted into the multiple-event pattern query format).

. Once the input query has been received by the inputter 301 as discussed above, and optionally wherein additional semantic annotation has been performed where this is to be used, the query is then passed onto the retriever 303. The retriever 303 is connected to a template database, which may be provided by the event provider 1. The template database comprises a plurality of event template types, which are annotated semantically with indications of the type of event to which they relate. In the embodiment shown in Fig. 1, the template database is provided by the event provider 1.

. The retriever 303 is configured to analyse the input query, as shown in step S32 of Fig. 9. Based on the information obtained from the initial input query, the retriever 303 interrogates the event template database 1 in order to determine potential event types which may match all or a portion of the input query. Given an example query of "how many Spanish companies have had a successful product launch in the last month", the retriever 303 may identify from this example that "product launch" may be relevant to the query. The information from the retained event pattern set may then be retrieved by the retriever 303, as shown in step S33 of Fig. 9. For the above example, the retriever 303 may obtain an event query template relating to "product launches" from the event template database 1. The event query templates retrieved by the retriever 303 are then passed onto the pattern query formulation unit 305.

. Following the analysis of the input query, the retriever 303 may establish that the query appears to relate to multiple event query types. In this event, the retriever 303 may be further configured to retrieve a plurality of event query templates.

. The pattern query formulation unit 305 receives the event query templates from the retriever 303, and also receives the initial input query (along with any semantic annotation if this is available) from the inputter 301. The pattern query formulation unit 305 then attempts to formulate a multiple-event pattern query utilising the information it has received, as shown in step S34 of Fig. 9.

. A multiple-event pattern query is an event template form containing a plurality of variables. Among the variables, the entities are typically limited by type (for example, an entity known to be a product, an entity known to be a company, and so on) and any predicates involved in the entities may also be similarly limited (for example, related to the acquisition or merger of companies). Returning to the example discussed above of Spanish companies having successful product launches in the last month, a multiple-event pattern query based on this initial input query may include a definition of a successful product launch as, for example, a product launch which is followed chronologically by three consecutive days of increase in the company's stock price. A sample event pattern for a successful product release is shown in Fig. 10. As shown in Fig. 10, the "successful product launch" multiple-event pattern query is based on a further pattern query for a consecutive three days stock price increase. In the present example, this pattern query would be further (geographically) limited to require that the company is known to originate from a specific country, namely Spain.

. In order to satisfy the consecutive three days stock price increase event pattern, three StockEvents are required, each of which relates to a company ("a", "b" or "c" in Fig. 3, wherein "a", "b" and "c" are further required to be the same company).

. Fig. 10 illustrates a further option which may be included in the multiple-event pattern query, wherein the events required to satisfy the query are chronologically ordered. As discussed briefly above, the multiple-event pattern query may be submitted to a database or to an event stream (that is, events being retrieve from heterogeneous sources on an ongoing basis), and may retrieve any event or events which satisfy the query. The chronological requirement places the additional burden that only events which satisfy the variable requirements and also the chronological requirements may be deemed to satisfy the multiple-event pattern query. The temporal ordering in the present example requires that the event for the closing price of the stock ("close") is higher for the second "close" event (chronologically) than the first "close" event, and higher for the third "close" event than the second.

. The "successful product release" pattern further requires that an event that is the release of the product occurs (chronologically) before the consecutive three day stock price increase event. Accordingly, a series of events comprising first the consecutive three day stock price increase and then the release of a product would not satisfy the "successful product release" pattern.

. The above example also has the additional requirement of a time interval threshold into which events satisfying the multiple-event pattern query must fall. In this instance, in order to satisfy the consecutive three day stock price increase pattern query, it is necessary for the stock price rise event to occur on three consecutive days (as indicated by the "win:time(3 days)" requirement. Accordingly, if a day of neutral stock price, falling stock price or simply the absence of knowledge of the stock price were to interrupt the three stock price rise days, this would not satisfy the event criteria.

. A further option which may be implemented in the multiple-event pattern query is the retrieval of provenance information for the events, where said provenance information is available. This is different to the chronological requirements and geographical requirements as discussed above. This is because the chronological and geographical requirements (for example, reference to companies originating from a specific country, such as Spain) are hard requirements; if these requirements are not satisfied by an event, the event cannot be considered to satisfy all or part of the pattern query. By contrast, the provenance requirements are typically soft requirements, not hard requirements. That is, in the event that provenance information is not available, this will not cause patterns satisfying the multiple-event pattern query to be rejected. Other hard and soft requirements may also be used.

. Provenance information is used to indicate the origin of events which are deemed to satisfy the multiple-event pattern query. This information may be useful, for example, where certain sources of events are known to be more reliable than other sources of events. As an example of this, typically information retrieved from a stock market site would be deemed to be more reliable than a personal blog. This information may then be provided to a user once events satisfying the multiple-event pattern query have been retrieved, such that the user may factor the reliability of the source of the event into a subsequent analysis when determining future actions to take.

. Once the multiple-event pattern query has been generated by the pattern query formulation unit 305, the multiple-event pattern query may then be sent to the transmitter 307 for transmission to the semantic event processor 400, as shown in step S35 of Fig. 9.

. The semantic event processor 400 receives the event instances from the reconciliation unit 200 and processes these event instances utilising the multiple-event pattern queries from the query generator 300. As detailed above, these multiple-event pattern queries identify a grouping of individual event instances which may be indicative of a larger trend. For example, given a case where all of companies P, Q and R work in the same general technical field, such as oil or gas extraction, it is possible that a multiple-event pattern query could relate to these three companies. The multiple-event pattern query could indicate that event instances showing a rise in the price of stocks of companies P, Q and R on the same day could be indicative of a general rise in the value of stocks in the area of oil and gas extraction. The multiple-events pattern query would then require that event instances satisfying the query fulfil various criteria, namely that all of the companies identified in the event instances were in the same technical area (that of oil and gas extraction in this case), that the event instances indicated a rise in share value, and that the time stamp of the event instances related to the same day.

. Where the semantic event processor 400 identifies a series of event instances which collectively satisfy a multiple-event pattern query (as shown in step S1004 of Fig. 1A), this series of event instances may then be linked and also semantically annotated. In the embodiment shown in Fig. 7, the identification is performed by an event identifier, and a semantic annotator is responsible for linking and semantic annotation. The purpose of the semantic annotations is both to facilitate data integration and to allow the identified events (satisfying the query) to be retrieved on the basis of a plurality of different criteria. For example, the events could be tagged with information indicating that they relate to stock market events, that they relate to the oil and gas industry, that they relate to share price variation, and so on.

. Once the semantic event processor 400 has identified event instances which satisfy a multiple-event pattern query, the event instances are semantically annotated as discussed above and are then stored in a multiple event storage unit 500, as shown in step S1005 of Fig. 1A. The linked and semantically annotated events may be transmitted to the multiple event storage unit 500 by a linked event transmitter, as shown in Fig. 7. The event instances are stored in the storage unit 500 in conjunction with the semantic annotators indicating relevant properties of the event instances. In this way, a database of past occurrences is generated which may subsequently be interrogated in order to allow financial reports to be generated, and predictions of future occurrences to be made. This may allow richer information to be extracted from the information. General queries such as, for example, list all successful product releases of Spanish companies may then be answered through interrogation of the multiple event storage unit 500 using a suitable query engine. In the aspect of the embodiment of the invention illustrated in Fig. 1, the multiple event storage unit 500 is contained within the apparatus 1000. However, in alternative embodiments it is possible that the storage units may be located remotely from the apparatus 1000, for example connected to the apparatus 1000 through a network such as the internet. This is particularly applicable in the case where large amounts of data are generated (as is often the case in the financial area), wherein the multiple storage unit 500 may be located within a server farm, for example. The event information may then be retrieved at will from the storage unit 500 to create financial reports in response to user queries.

. In the present invention, an automated system for extracting relevant information in relation to a particular domain from a plurality of heterogeneous sources is provided. The system allows that a far broader range of sources and types of information may be processed than could be analysed by alternative techniques (such as processing by a human operator). The system therefore allows a database of useful information to be constructed and useful predictions of future occurrences to be made on the basis of the information in this database.

. Applications of the invention are primarily related to fields wherein a large amount of data is generated at a high rate, such as financial or business fields, however the invention may also be applied to other fields wherein it is necessary to analyse data from heterogeneous (and potentially unstructured) sources.

. Fig. 11 is a block diagram of a computing device, such as a personal computer, which embodies an example, and which may be used to implement an embodiment of the method for generating financial reports. The computing device comprises a processor 993, and memory 994. Optionally, the computing device also includes a network interface 997 for communication with other computing devices, or for computing with remote databases.

. An example may be composed of a network of such computing devices, such that components of the apparatus 1000 are split across a plurality of computing devices. Optionally, the computing device also includes one or more input mechanisms such as keyboard and mouse or touchscreen interface 996, and a display unit such as one or more monitors 995. The components are connectable to one another via a bus 992.

. The memory 994 may include a computer readable medium, which term may refer to a single medium or multiple media (e.g., a centralized or distributed database and/or associated caches and servers) configured to carry computer-executable instructions or have data structures stored thereon. The memory 994 may be the same memory 9 as may be used for the storage of the event term database 91 and/or event instances, or a separate memory. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices). In particular, the computer readable medium may comprise a computer program which, when executed on a computer, causes the computer to perform a method for generating a financial event database as discussed above.

. The processor 993 is configured to control the computing device and execute processing operations, for example executing code stored in the memory to implement the various different functions of the event provider 1, reconciliation unit 200, query generator 300 and semantic event processor 400 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

. The display unit 997 may display a representation of data stored by the computing device and may also display a cursor and dialog boxes and screens enabling interaction between a user and the programs and data stored on the computing device. The display unit may also comprise a touchscreen interface. The input mechanisms 996 may enable a user to input data and instructions to the computing device, in particular, into the query generator 300.

. The network interface (network I/F) 997 may be connected to a network, such as the Internet, and is connectable to other such computing devices via the network. The network I/F 997 may control data input/output from/to other apparatus via the network. The network interface may also be used in receiving sample event patterns, retrieving terms information, sending generated refined event patterns, selecting raw information, storing events, transmitting events satisfying a multiple-event pattern query, and so on.

. Other peripheral devices such as microphone, speakers, printer, power supply unit, fan, case, scanner, trackerball etc. may be included in the computing device.

. The event provider 1 of Figure 1 may be a processor 993 (or plurality thereof) executing processing instructions (a program) stored on a memory 994 and exchanging data via a network I/F 997 or bus 992. In particular, the processor 993 may execute processing instructions to provide events matching refined event patterns as discussed above. Furthermore, the processor 993 may execute processing instructions to send the events matching refined event patterns to other components within the apparatus 1, such as the reconciliation unit 200 or to store the events matching refined event patterns in a memory, such as the memory 9.

. The reconciliation unit 200 of Figure 1 may be a processor 993 (or plurality thereof) executing processing instructions (a program) stored on a memory 994 and exchanging data via a network I/F 997 or bus 992. In particular, the processor 993 may execute processing instructions to reconcile stored events as discussed above. Furthermore, the processor 993 may execute processing instructions to send the reconciled events to other components within the apparatus 1, such as the semantic event processor 400, or to store the reconciled events in a memory, such as the memory 9.

. The query generator 300 of Figure 1 may be a processor 993 (or plurality thereof) executing processing instructions (a program) stored on a memory 994 and exchanging data via a network I/F 997 or bus 992. In particular, the processor 993 may execute processing instructions to generate a multiple-event pattern query as discussed above. Furthermore, the processor 993 may execute processing instructions to send the multiple-event pattern query to other components within the apparatus 1, such as the semantic event processor 400, or to store the multiple-event pattern query in a memory, such as the memory 9.

. The semantic event processor 400 of Figure 1 may be a processor 993 (or plurality thereof) executing processing instructions (a program) stored on a memory 994 and exchanging data via a network I/F 997 or bus 992. In particular, the processor 993 may execute processing instructions to identify events matching a multiple-event pattern query as discussed above. Furthermore, the processor 993 may execute processing instructions to send the events matching a multiple-event pattern query to other components within the apparatus 1, such as the multiple event storage unit 500.

. Exemplary methods may be carried out on one or more computing devices such as that illustrated in Figure 11. Such a computing device need not have every component illustrated in Figure 11, and may be composed of a subset of those components. A method may be carried out by a single computing device in communication with one or more data storage servers via a network, as discussed above. The scope of the invention is defined by the claims.

## Claims

1. An apparatus for generating a financial event database, the apparatus comprising:
an event provider configured to extract financial events from plural heterogeneous sources, to categorise the extracted events using a plurality of refined event patterns, and to store events matching a refined event pattern in an event storage unit;
a reconciliation unit configured to retrieve the stored events matching a refined event pattern from the event storage unit, to definitively identify entities in the events, to identify a time of occurrence for the events, and to determine if plural stored events relate to the same occurrence, wherein if the reconciliation unit determines that plural stored events relate to the same occurrence, the reconciliation unit reconciles the stored events such that only a single event relating to a given occurrence is retained;
a query generator configured to receive a query from a user, to reformat the query into a multiple-event pattern query, and to pass the multiple-event pattern query to a semantic event processor; and
a semantic event processor configured to semantically annotate the events retained by the reconciliation unit, such that no information from the plural stored events relating to the same occurrence is lost, and further configured to receive the multiple-event pattern query from the query generator, to identify plural events that collectively match the multiple-event pattern query, and to store the plural events as a multiple event query response in a multiple event storage unit.

2. The apparatus of claim 1, further comprising a stock event generator 100 configured to extract stock time-series events from stock market data websites, and to pass the extracted stock time-series events to the reconciliation unit.

3. The apparatus of any of claims 1 and 2, further comprising an XBRL report event generator configured to periodically retrieve XBRL reports from XBRL sources, to extract XBRL events from the XBRL reports, and to pass the extracted XBRL events to the reconciliation unit.

4. The apparatus of any of claims 1 to 3, wherein the plurality of heterogeneous sources are unstructured.

5. The apparatus of claim 4, wherein the plurality of unstructured heterogeneous sources comprise blogs, news reports and rss feeds.

6. The apparatus of any preceding claim, wherein the reconciliation unit utilises an entity index to determine if plural stored events relate to the same occurrence.

7. The apparatus of any preceding claim, wherein the event provider comprises a machine intelligence which is used to generate the plurality of refined event patterns from sample event patterns, the sample event patterns being obtained from raw data.

8. The apparatus of any preceding claim, wherein the query generator utilises an established database to reformat the received query.

9. A method for generating a financial event database, the method including the steps of:
extracting financial events from plural heterogeneous sources;
categorising the extracted events using a plurality of refined event patterns;
storing events matching a refined event pattern in an event storage unit;
retrieving the stored events matching a refined event pattern from the event storage unit;
definitively identifying entities in the events;
identifying a time of occurrence for the events;
determining if plural stored events relate to the same occurrence and, if it is determined that plural stored events relate to the same occurrence, reconciling the stored events such that only a single event relating to a given occurrence is retained;
semantically annotating the retained event such that no information from the plural stored events relating to the same occurrence is lost;
receiving a query from a user;
reformatting the query into a multiple-event pattern query;
identifying plural events that collectively match the multiple-event pattern query; and
storing the plural events as a multiple event query response in a multiple event storage unit.

10. A computer program which, when executed on a computer, causes the computer to perform a method for generating a financial event database in accordance with claim 9.

11. A non-transitory computer readable medium comprising a computer program in accordance with claim 10.
